# EUROPÄISCHE PATENTSCHRIFT

(11) **EP 1 740 876 B1**
(45) Veröffentlichungstag und Bekanntmachung des Hinweises auf die Patenterteilung: **07.07.2010**
(21) Anmeldenummer: 05716164.8
(22) Anmeldetag: 17.03.2005
(51) Int. Cl.: F16L 37/14, F16L 37/12

(54) **KUPPLUNG FÜR EIN FLUIDLEITUNGSSYSTEM**
COUPLING FOR A FLUID CONDUCTING SYSTEM
DISPOSITIF D'ACCOUPLEMENT POUR SYSTEME DE GUIDAGE FLUIDIQUE

(30) Priorität: 22.04.2004 DE 102004020505
(43) Veröffentlichungstag der Anmeldung: 10.01.2007
(73) Patentinhaber: A. RAYMOND ET CIE, 38019 Grenoble Cedex 1 (FR); Volkswagen Aktiengesellschaft, 38436 Wolfsburg (DE)
(72) Erfinder: FEGER, Axel, 79540 Lörrach (DE); TREDE, Michael, F-68440 Habsheim (FR); UTZ, Daniel, 79415 Bad Bellingen (DE); KÜBEL, Matthias, 38116 Braunschweig (DE)
(74) Vertreter: Rüttgers, Joachim
(86) Internationale Anmeldenummer: PCT/EP2005/002860
(87) Internationale Veröffentlichungsnummer: WO 2005/106312

(56) Entgegenhaltungen:
- EP-A- 1 158 236
- DE-C1- 10 141 315
- US-A- 5 423 577

## Beschreibung

Die Erfindung betrifft eine Kupplung für ein Fluidleitungssystem gemäß dem Oberbegriff des Patentanspruches 1.

Eine derartige Kupplung ist aus EP 1 158 236 A1 bekannt. Diese Kupplung verfügt über ein Kupplungsteil, in das ein Einführabschnitt eines Gegenstückes einführbar ist, wobei das Kupplungsteil mit einander gegenüberliegenden Führungsausnehmungen ausgebildet ist. Weiterhin ist ein Verriegelungsteil vorhanden, das beweglich an dem Kupplungsteil angebracht ist und über in die Führungsausnehmungen eingreifende Arretierstege verfügt, die in einer Arretierstellung mit einer an dem Einführabschnitt ausgebildeten Komplementärstruktur zum Verriegeln des Gegenstückes und des Kupplungsteiles zusammenwirkt. Im Bereich der freien Enden der Arretierstege ist eine Raststruktur vorhanden, die für eine gewisse Sicherung in der Verriegelungsstellung das Kupplungsteil abschnittweise hintergreifen. Weiterhin ist eine Sicherungsbuchse vorhanden, die eine Arretierstruktur aufweist.

Eine weitere Kupplung ist aus DE 101 41 315 C1 bekannt. Diese Kupplung verfügt über ein Kupplungsteil, in das ein Einführabschnitt eines Gegenstückes einführbar ist. Weiterhin ist ein C-förmiges Verriegelungsteil vorhanden, das um die Längsachse der Kupplung drehbar an dem Kupplungsteil angebracht ist. Das Verriegelungsteil verfügt als Arretierstruktur über kreissegmentartige Abschnitte, die in einer Arretierstellung mit einer an dem Einführabschnitt des Gegenstückes ausgebildeten Komplementärstruktur zum Verriegeln des Einführabschnittes und des Kupplungsteiles in einer Verriegelungsstellung dadurch zusammenwirken, dass sie in an dem Kupplungsteil und dem Einführabschnitt ausgebildeten Vertiefungen eingreifen. Bei Drehen des Verriegelungsteiles um die Längsachse der Kupplung gleiten die kreissegmentartigen Abschnitte unter Aufbiegen des Verriegelungsteiles aus den Vertiefungen heraus und geben den Einführabschnitt in einer Freigabestellung frei. Zum Erleichtern der Drehung sind an der Außenseite des Verriegelungsteiles Griffrillen oder Griffnoppen vorhanden. Bei der Handhabung dieser vorbekannten Kupplung hat sich jedoch in gewisser Hinsicht als nachteilig herausgestellt, dass die Freigabestellung eine gewisse Instabilität aufweist, da bei Einwirken einer relativ geringen Kraft auf das Kupplungsteil dieses sprungartig von der Freigabestellung unmittelbar in die Verriegelungsstellung übergeht. Weiterhin hat sich das Überführen des Kupplungsteiles von der Verriegelungsstellung in die Freigabestellung durch Drehung desselben auf Grund des hierfür erforderlichen, relativ großen Raumbedarf als nicht optimal erwiesen. Schließlich ist bei einem beispielsweise nach Abnutzen der Griffrillen oder Griffnoppen glattwandigen Verriegelungsteil das Ausführen der Drehbewegung mitunter nicht unproblematisch.

Der Erfindung liegt die Aufgabe zugrunde, eine Kupplung der eingangs genannten Art anzugeben, die sich bei einem verhältnismäßig einfachen Aufbau durch eine hohe Stabilität und eine verbesserte Handhabung auszeichnet.

Diese Aufgabe wird bei einer Kupplung der eingangs genannten Art erfindungsgemäß mit den kennzeichnenden Merkmalen des Patentanspruches 1 gelöst.

Durch die erfindungsgemäße Ausbildung der Kupplung ergibt sich der Vorteil, dass sie bei einem zur Sicherung lediglich zweiteiligen Aufbau gegenüber äußeren Krafteinwirkungen eine relativ hohe Stabilität aufweist, wobei ein unbeabsichtigtes Ausrasten des Verriegelungsteiles aus der Verriegelungsstellung zumindest erschwert ist. Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: in einer perspektivischen Ansicht ein bevorzugtes Aus- führungsbeispiel der Erfindung mit einem Kupplungsteil und einem Verriegelungsteil, das sich in der Darstellung gemäß Fig. 1 in einer Freigabestellung befindet, und ein Einführabschnitt eines Gegenstückes, der sich in einem Abstand von dem Kupplungsteil befindet,
- Fig. 2: in einer perspektivischen Ansicht das Ausführungsbei- spiel gemäß Fig. 1 im Schnitt durch das Kupplungsteil und das in einer Verriegelungsstellung befindliche Ver- riegelungsteil sowie durch den in das Kupplungsteil ein- gefügten Einführabschnitt und
- Fig. 3: in einer perspektivischen, in Längsrichtung teilgeschnit- tenen Ansicht das Ausführungsbeispiel gemäß Fig. 1 und Fig. 2.

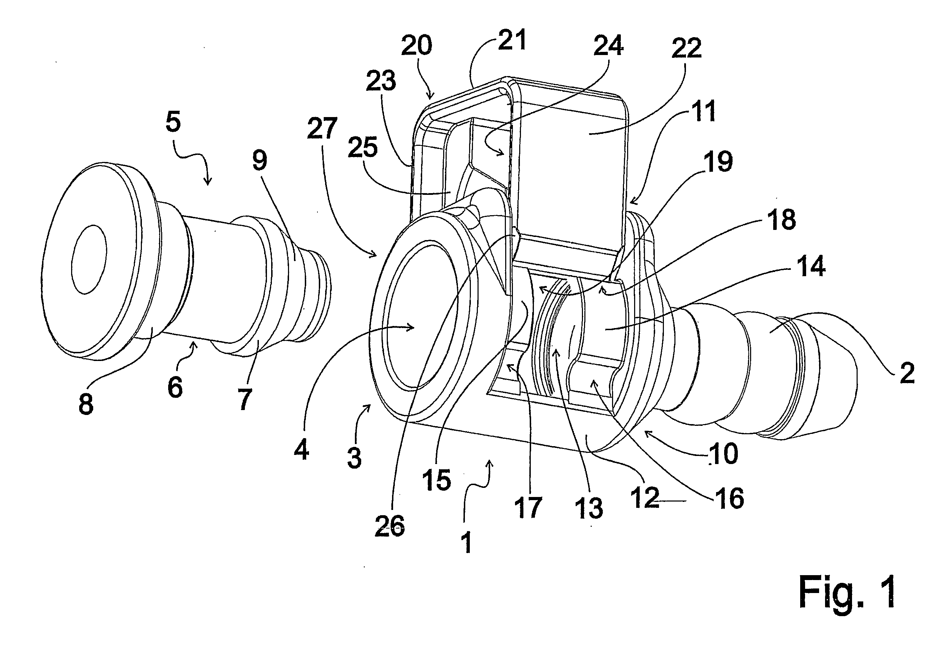

Fig. 1 zeigt in einer perspektivischen Ansicht ein Ausführungsbeispiel einer erfindungsgemäßen Kupplung mit einem länglichen Kupplungsteil 1, das auf einer Seite über einen Anschlussstutzen 2 verfügt. Auf den vorzugsweise mit einem in Längsrichtung veränderlichen Querschnitt ausgebildeten und endseitig angeschrägten Anschlussstutzen 2 ist beispielsweise ein Ende eines flexiblen Schlauches eines in Fig. 1 nicht dargestellten Fluidleitungssystems aufschiebbar. Auf einer dem Anschlussstutzen 2 gegenüberliegenden Einführseite 3 ist das Kupplungsteil 1 mit einer im Querschnitt runden Einführöffnung 4 ausgebildet, in die ein in Fig. 1 in einem Abstand von dem Kupplungsteil 1 dargestelltes Gegenstück mit einem länglichen, im wesentlichen zylinderartigen Einführabschnitt 5 einführbar ist.

Der Einführabschnitt 5 des Gegenstückes verfügt über eine umlaufende Sicherungsvertiefung 6, die randseitig von einem im Bereich des freien Endes des Einführabschnittes 5 angeordneten ersten Randbund 7 und einem dem ersten Randbund 7 gegenüberliegenden zweiten Randbund 8 begrenzt ist. Der Einführabschnitt 5 ist beispielsweise als ein an einem Fluidvorratsbehälter des Fluidleitungssystems angesetzter Endstutzen ausgebildet oder mit einem Ende eines weiteren flexiblen Schlauches des Fluidleitungssystems verbindbar. An seinem bei bestimmungsgemäßer Handhabung unmittelbar vor einem Einfügen in das Kupplungsteil 1 der Einführseite 3 zugewandten Endabschnitt weist der Einführabschnitt 5 zum Erleichtern des Einfügens in das Kupplungsteil 1 eine Einführschräge 9 auf.

Zwischen dem Anschlussstutzen 2 und der Einführseite 3 ist das Kupplungsteil 1 mit einem gegenüber dem Anschlussstutzen 2 verdickten Kupplungsabschnitt 10 ausgebildet, in dem sich seitlich eingebrachte sowie sich von einem Dachsteg 11 zu einem Bodensteg 12 und damit rechtwinklig zur Längsrichtung des Kupplungsteiles 1 erstreckende Führungsausnehmungen 13 vorhanden sind. In Längsrichtung des Kupplungsteiles 1 beidseitig der Führungsausnehmungen 13 sind gegenüber der Außenseite des Kupplungsabschnittes 10 nach innen versetzte, leicht nach außen gewölbte Gleitflächen 14, 15 vorhanden, die in ihren dem Bodensteg 12 zugewandten Endbereichen mit Verriegelungsvertiefungen 16, 17 als Arretierstruktur und in ihren dem Dachsteg 11 zugewandten Endbereichen mit der Freihaltevertiefungen 18, 19 als Freihaltestruktur ausgebildet sind. Die Verriegelungsvertiefungen 16, 17 und die Freihaltevertiefungen 18, 19 sind in Längsrichtung des Kupplungsteiles 1 ausgerichtet.

Weiterhin ist das in Fig. 1 dargestellte bevorzugte Ausführungsbeispiel mit einem im wesentlichen U-förmigen, lösbar an dem Kupplungsteil 1 angebrachten Verriegelungsteil 20 ausgestattet, das über einen außenseitig flachen Dachabschnitt 21 und zwei rechtwinklig an dem Dachabschnitt 21 angeformten, außenseitig ebenfalls flachen Seitenabschnitten 22, 23 verfügt. Auf der Innenseite jedes Seitenabschnittes 22, 23 ist jeweils ein innenseitig eingewölbter Arretiersteg 24, 25 ausgebildet, die an die Dimensionen der Führungsausnehmungen 13 angepasst sind und in diese eingreifen. Der Innendurchmesser des Verriegelungsteiles 20 im Bereich der Einwölbungen der Arretierstege 24, 25 ist zum Erzeugen einer Vorspannung geringfügig kleiner als der Außendurchmesser des Einführabschnittes 5 im Bereich der Sicherungsvertiefungen 6. An den Seitenabschnitten 22, 23 sind im Bereich der von dem Dachabschnitt 21 abgewandten Enden der Arretierstege 24, 25 von diesen in Längsrichtung des Kupplungsteiles 1 ausgerichtete, abstehende Rastnasen 26, 27 als Raststruktur ausgebildet, die zum Eingriff in die Verriegelungsvertiefungen 16, 17 und der Freihaltevertiefungen 18, 19 dimensioniert sind.

In der Darstellung gemäß Fig. 1 befindet sich das Verriegelungsteil 20 in einer fixierten Freigabestellung, in der die Rastnasen 26, 27 mit den Freihaltevertiefungen 18, 19 in Eingriff sind.

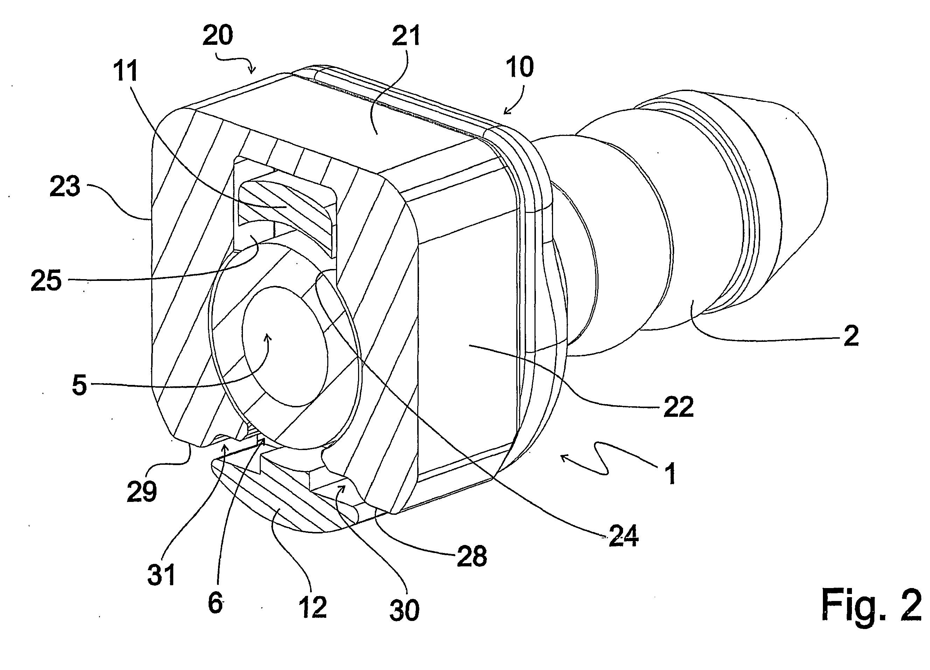

Fig. 2 zeigt in einer perspektivischen Ansicht das Ausführungsbeispiel gemäß Fig. 1 im Schnitt durch das Kupplungsteil 1 und das in einer Verriegelungsstellung befindliche Verriegelungsteil 20 sowie durch den in das Kupplungsteil 1 eingefügten Einführabschnitt 5. Aus Fig. 2 ist erkennbar, dass das Verriegelungsteil 20 ausgehend von der in Fig. 1 dargestellten Freigabestellung die Verriegelungsstellung dadurch eingenommen hat, indem beispielsweise mit einer Fingerspitze oder mit einem Werkzeug auf den Dachabschnitt 21 in Richtung der Seitenabschnitte 21, 22 eine zum Überwinden des Eingriffs der Rastnasen 26, 27 mit den Freihaltevertiefungen 18, 19 ausreichende Kraft ausgeübt wird, bei weiterhin einwirkender Kraft die Innenseiten der Seitenabschnitte 22, 23 auf den Geleitsflächen 14, 15 entlanggleiten und die Arretierstege 24, 25 weiter in die Führungsausnehmungen 13 des Kupplungsteiles 1 eingreifen. In der Verriegelungsstellung greifen die in Fig. 2 nicht sichtbaren Rastnasen 26, 27 in die ebenfalls nicht sichtbaren Verriegelungsvertiefungen 16, 17 ein, so dass auch in der Verriegelungsstellung das Verriegelungsteil 20 fixiert ist.

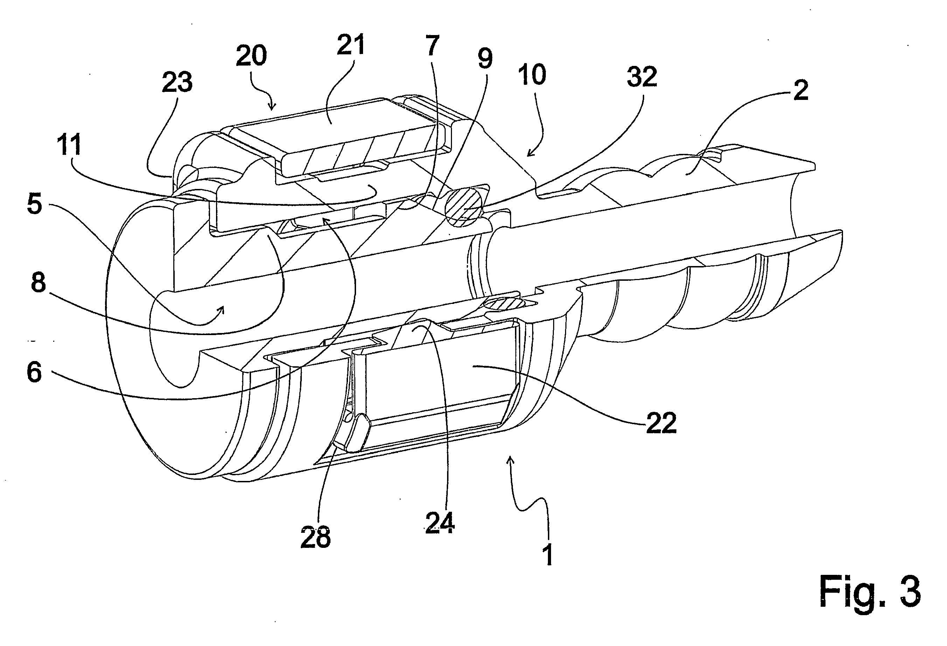

Fig. 3 zeigt in einer perspektivischen, in Längsrichtung im Übergangsbereich von einem Seitenabschnitt 22 in den Dachabschnitt 21 teilgeschnittenen Ansicht das Ausführungsbeispiel gemäß Fig. 1 und Fig. 2 mit dem Verriegelungsteil 20 in der Verriegelungsstellung. Aus Fig. 3 ist ersichtlich, dass im Bereich der Einführschräge 9 des Einführabschnittes 5 ein Dichtungsring 32 zwischen dem Kupplungsteil 1 und dem Einführabschnitt 5 angeordnet ist, um eine dichte Verbindung in dem Fluidleitungssystem zu erzielen. Weiterhin ist Fig. 3 zu entnehmen, dass die dem Anschlussstutzen 2 zugewandten Randseiten der Arretierstege 24, 25 an dem dem freien Ende des Einführabschnittes 5 benachbarten ersten Randbund 7 anliegen und dadurch den Einführabschnitt 5 im wesentlichen spielfrei in dem Kupplungsteil 1 halten.

Bei Einführen des Einführabschnittes 5 in das Kupplungsteil 1 mit dem Verriegelungsteil 20 in der Verriegelungsstellung gleiten die in Richtung der Einführseite 3 in Einführrichtung vorteilhafterweise ebenfalls angeschrägten Arretierstege 24, 25 des Verriegelungsteiles 20 an der Einführschräge 9 auf, bis die Arretierstege 24, 25 den ersten Randbund 7 hintergreifen und die Einwölbungen der Arretierstege 24, 25 den Einführabschnitt 5 im Bereich der Sicherungsvertiefung 6 abschnittsweise umschließen. Damit ist das Gegenstück mit dem Kupplungsteil 1 gekoppelt.

Zum Überführen des Verriegelungsteiles 20 von der Verriegelungsstellung in die Freigabestellung zum Freigeben des Einführabschnittes 5 wird an von dem Dachabschnitt 21 abgewandten Stirnseiten 28, 29 im Bereich von als Reliefstruktur vorgesehenen Eingriffsvertiefungen 30, 31 wechselseitig beispielsweise ein Fingernagel oder das stirnseitige Ende einer Schraubendreherklinge angesetzt, um mit jeweils einer Schubbewegung in Richtung des Dachabschnittes 21 den Eingriff der Rastnasen 26, 27 mit den Verriegelungsvertiefungen 16, 17 zu lösen.

## Patentansprüche

1. Kupplung für ein Fluidleitungssystem mit einem Kupplungsteil (1), in das ein Einführabschnitt (5) eines Gegenstückes einführbar ist, wobei das Kupplungsteil (1) mit einander gegenüberliegenden Führungsausnehmungen (13) ausgebildet ist, und mit einem Verriegelungsteil (20), das beweglich an dem Kupplungsteil (1) angebracht ist und über eine Arretierstruktur verfügt, die in einer Arretierstellung mit einer an dem Einführabschnitt (5) ausgebildeten Komplementärstruktur zum Verriegeln des Gegenstückes und des Kupplungsteiles (1) zusammenwirken, wobei im Bereich der freien Enden der zwei zueinander parallelen Seitenabschnitte (22, 23) eine Raststruktur (26, 27) vorhanden ist, **dadurch gekennzeichnet, dass** an den dem Kupplungsteil (1) zugewandten Innenseiten der Seitenabschnitte (22, 23) jeweils ein in Längsrichtung der Kupplung verlaufender und in die Führungsausnehmung (13) eingreifender Arretiersteg (24, 25) ausgebildet ist und dass das Kupplungsteil (1) im Bereich eines Endes der Führungsausnehmungen (13) mit einer zu der Raststruktur (26, 27) komplementär ausgebildeten Arretierstruktur (16, 17) ausgestattet ist.

2. Kupplung nach Anspruch 1, **dadurch gekennzeichnet, dass** das Kupplungsteil (1) im Bereich des anderen Endes der Führungsausnehmungen (13) mit einer entsprechend der Arretierstruktur (16, 17) ausgebildeten Freihaltestruktur (18, 19) ausgestattet ist.

3. Kupplung nach Anspruch 2, **dadurch gekennzeichnet, dass** die Raststruktur (26, 27) aus Rastnasen, die Arretierstruktur (16, 17) aus Verriegelungsvertiefungen und die Freihaltestruktur (18, 19) aus Freihaltevertiefungen gebildet sind, die rechtwinklig zu den Arretierstegen (24, 25) in Längsrichtung des Kupplungsteiles (1) ausgerichtet sind.

4. Kupplung nach einem der Ansprüche 1 bis 3, **dadurch gekennzeichnet, dass** im Bereich der freien Enden des Verriegelungsteiles (20) eine Reliefstruktur (30, 31) ausgebildet ist.

5. Kupplung nach einem der Ansprüche 1 bis 4, **dadurch gekennzeichnet, dass** das Verriegelungsteil (20) einen rechtwinklig zu den Seitenabschnitten (22, 23) ausgerichteten flachen Dachabschnitt (21) aufweist.

6. Kupplung nach einem der Ansprüche 1 bis 5, **dadurch gekennzeichnet, dass** die Arretierstege (24, 25) in Richtung einer Einführseite (3) des Kupplungsteiles (1) angeschrägt sind.

## Claims

1. Coupling for a fluid conducting system having a coupling part (1) into which an inserted section (5) of a counterpart can be inserted, the coupling part (1) being formed with guide recesses (13) opposite one another, and having a locking part (20) which is displaceably mounted on the coupling part (1) and has a locking structure which, in a locking position, cooperates with a complementary structure formed on the inserted section (5) and intended for locking the counter part and the coupling part (1), a snap-in structure (26, 27) being present in the region of the free ends of the two side sections (22, 23) parallel to one another, **characterized in that** in each case a locking fin (24, 25) running in the longitudinal direction of the coupling and engaging the guide recess (13) is formed on those insides of the side sections (22, 23) which face the coupling part (1), and **in that** the coupling part (1) is equipped, in the region of one end of the guide recesses (13), with a locking structure (16, 17) formed complementary to the snap-in structure (26, 27).

2. Coupling according to Claim 1, **characterized in that** the coupling part (1) is equipped, in the region of the other end of the guide recesses (13), with a release structure (18, 19) formed to correspond to the locking structure (16, 17).

3. Coupling according to Claim 2, **characterized in that** the snap-in structure (26, 27) is formed from detents, the locking structure (16, 17) is formed from locking indentations and the release structure (18, 19) is formed from release indentations, which are oriented at right angles to the locking fins (24, 25) in the longitudinal direction of the coupling part (1).

4. Coupling according to any of Claims 1 to 3, **characterized in that** a relief structure (30, 31) is formed in the region of the free ends of the locking part (20).

5. Coupling according to any of Claims 1 to 4, **characterized in that** the locking part (20) has a flat roof section (21) oriented at right angles to the side sections (22, 23).

6. Coupling according to any of Claims 1 to 5, **characterized in that** the locking fins (24, 25) are bevelled in the direction of an insertion side (3) of the coupling part (1).

## Revendications

1. Raccord destiné à un système de conduites véhiculant un fluide, comprenant un organe d'accouplement (1) dans lequel la portion d'emmanchement (5) d'un élément d'accouplement conjugué est destinée à être introduite, dans lequel l'organe d'accouplement (1) est muni d'évidements d'introduction (13) se faisant respectivement face et comprenant un organe de verrouillage (20) qui est disposé mobile sur l'organe d'accouplement (1) et qui comporte une structure d'immobilisation en position, qui, dans une position de blocage en position opèrent en combinaison avec une structure agencée en correspondance d'accouplement ménagée dans la portion d'emmanchement (5) pour verrouiller l'élément d'accouplement conjugué et l'organe d'accouplement (1), dans lequel il est prévu, dans la zone des extrémités libres des deux portions latérales respectivement parallèles une structure d'accrochage (26, 27), **caractérisé en ce qu'**il est prévu au niveau des faces intérieures des portions latérales (22, 23) orientées en direction de l'organe d'accouplement (1) respectivement une nervure (24, 25) d'immobilisation en position qui s'étend dans le sens longitudinal du raccord et qui vient en prise d'engagement dans l'évidement d'introduction (13) et **en ce que** l'organe d'accouplement (1) est muni, dans la zone d'une extrémité des évidements d'introduction (13), d'une structure d'immobilisation en position (16, 17) dont la configuration est étudiée pour venir en correspondance d'accouplement avec la structure d'accrochage (26, 27).

2. Raccord selon la revendication 1, **caractérisé en ce que** l'organe d'accouplement (1) est muni, dans la zone de l'autre extrémité des évidements d'introduction (13), d'une structure d'empêchement de blocage (18, 19) dont la configuration est étudiée en fonction de celle de la structure d'immobilisation en position (16, 17).

3. Raccord selon la revendication 2, **caractérisé en ce que** la structure d'accrochage (26, 27) est constituée par des ergots d'accrochage, la structure d'immobilisation en position (16, 17) par des dépressions de verrouillage et la structure d'empêchement de blocage (18, 19) par des dépressions d'empêchement de blocage, qui sont orientées perpendiculairement aux nervures d'immobilisation en position (24, 25) dans le sens longitudinal de l'organe d'accouplement (1).

4. Raccord selon l'une des revendications 1 à 3, **caractérisé en ce qu'**il est prévu une structure en relief (30, 31) dans la zone des extrémités libres de l'organe de verrouillage (20).

5. Raccord selon l'une des revendications 1 à 4, **caractérisé en ce que** l'organe de verrouillage (20) comporte une portion de couverture plate (21) orientée perpendiculairement aux portions latérales (22, 23).

6. Raccord selon l'une des revendications 1 à 5, **caractérisé en ce que** les nervures d'immobilisation en position (24, 25) présentent une conicité orientée dans la direction du côté d'introduction (3) de l'organe d'accouplement (1).
